# EUROPEAN PATENT SPECIFICATION

(11) **EP 3 221 756 B1**
(45) Date of publication and mention of the grant of the patent: **13.10.2021**
(21) Application number: 14806785.3
(22) Date of filing: 18.11.2014
(51) Int. Cl.: G05B 19/05

(54) **SEMANTIC CONTEXTUALIZATION IN A PROGRAMMABLE LOGIC CONTROLLER**
SEMANTISCHE KONTEXTUALISIERUNG IN EINER SPEICHERPROGRAMMIERBAREN STEUERUNG
CONTEXTUALISATION SÉMANTIQUE DANS UN AUTOMATE PROGRAMMABLE

(43) Date of publication of application: 27.09.2017
(73) Proprietor: Siemens Aktiengesellschaft, 80333 München (DE)
(72) Inventor: LAMPARTER, Steffen, 85622 Feldkirchen (DE); ROSCA, Justinian, West Windsor, New Jersey 08550 (US); WANG, Lingyun, Princeton, New Jersey 08540 (US); LO, George, Langhorne, Pennsylvania 19047 (US)
(74) Representative: Isarpatent
(86) International application number: PCT/US2014/066137
(87) International publication number: WO 2016/080964

(56) References cited:
- EP-A2- 1 895 740
- EP-A2- 1 921 527

## Description

### TECHNICAL FIELD

The present invention relates generally to the semantic contextualization of automation system data in a programmable logic controller. The disclosed technology may be applied to, for example, various automated production environments where programmable controllers are used.

### BACKGROUND

A programmable logic controller (PLC) is a specialized computer control system configured to execute software which continuously gathers data on the state of input devices to control the state of output devices. A PLC typically includes three major components: a processor (which may include volatile memory), volatile memory comprising an application program, and one or more input/output (I/O) ports for connecting to other devices in the automation system. PLCs are utilized in various industrial settings to control automation systems. Automation systems typically generate a large amount of data in their daily operations. This data may include, for example, sensor data, actuator and control program parameters, and information associated with service activities.

Due to the ever increasing number of sensors and actuators installed in today's automation systems, the amount of data describing the underlying technical processes and control is growing. This data includes, for example, control input variables (e.g., sensors) and output variables (e.g., actuators), their historical data, as well as a description of the state of the control process. There is a huge potential to utilize this data to gain additional insights into the evolution and effectiveness of the processes and this data can be used for enhancements and optimization of the process, for example, through data analytics methods. However, is extremely difficult to make sense of the (potentially) available data if the context of data generation is not known. Contextual information that may be useful in understanding the data may include, for example, the location and specification of the sensor that generated the data, the function of the actuator the data refers to, the causal dependence of several related data items, an identifier of the product or batch that was processed when the data was generated, the description of the maintenance task that was executed shortly before the data is generated, the specific part of the control program that the data refers to, etc.

In conventional systems, contextual knowledge is statically defined by the application engineer during development of data analytics algorithms. That is, the application engineer codes analytics algorithms based on his or her knowledge of the contextual data that is available in the system. However, these conventional systems have several drawbacks. As an initial matter, at design and installation time, there is a huge effort required to specify what information should be contextualized, how it should be captured, and how it should be formalized. Moreover, the resulting analytics applications using the contextualized data are specific to a particular customer and/or domain; there is no standardization such that these applications may be reused without additional customization. Additionally, changes in the underlying automation infrastructure (e.g., adding a new sensor) require manual effort to adapt existing applications. Furthermore, even where contextual data is available, conventional systems typically do not make it available in a format that is easily provided to service providers and other third parties.

EP1895740 relates to an industrial automation device including a receiver component that receives a request for structured data.

### SUMMARY

Embodiments of the present invention address and overcome one or more of the above shortcomings and drawbacks, by providing methods, systems, and apparatuses related to adding context to data using semantic models expressed in a standardized, formal, domain-independent language directly when data is generated. At this point, the context is still known and made persistent for later analyses. This technology is particularly well-suited for, but not limited to, various industrial automation settings. The invention is defined by the features of the appended claims.

Additional features and advantages of the invention will be made apparent from the following detailed description of illustrative embodiments that proceeds with reference to the accompanying drawings.

### BRIEF DESCRIPTION OF THE DRAWINGS

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Included in the drawings are the following Figures:
FIG. 1 provides a system view of an Intelligent PLCs integrated into an automation system, according to some embodiments of the present invention;
FIG. 2 provides an illustration of the system components included in an Intelligent PLC, according to some embodiments of the present invention;
FIG. 3 provides a process in which contextualized data is generated, stored, and utilized by an Intelligent PLC, according to some embodiments of the present invention;
FIG. 4A provides a view of a graphical user interface (GUI) referred to herein as a "Smart Data Browser" which provides ontological information used in the contextualization of automation data, according to some embodiments of the present invention;
FIG. 4B provides an alternate view of the Smart Data Browser where fault data is presented, according to some embodiments of the present invention; and
FIG. 5 provides an example of a product ontology file in RDF/XML syntax as may be utilized according to some embodiments of the present invention.

### DETAILED DESCRIPTION

Systems, methods, and apparatuses are described herein which relate generally to the use of standardized, formal modeling languages (e.g., Semantic Web standards such as RDF(S), OWL) within automation devices such as programmable logic controllers to annotate and contextualize automation system data. In various embodiments of the present invention techniques are described for defining and representing contextual information that may be used to perform on-line analytics of control specific time series data, and reason about the state and condition of context elements. This contextual information may be used, for example, to enhance control execution with on-line analytics and reasoning. Semantic contextualization on the automation level enables adding additional context information which is not available on higher levels such as, for example, control context. Additionally, in some embodiments, standardized interfaces (e.g., SPARQL) may be used to access contextualized information generated and/or stored on the automation devices.

Various embodiments of the present invention are described in the context of a PLC which includes various components configured to provide an assortment of enhanced functions in control applications. This PLC, referred to herein as an "Intelligent PLC" is described in greater detail in U.S. Application No. 14/467,125 entitled "Intelligent Programmable Logic Controller,". Briefly, the Intelligent PLC offers several technical features which may be present in various combinations and used in different embodiments of the present invention. The Intelligent PLC provides efficient data storage on control layer devices. More specifically, functionality of the control layer may be extended by an efficient storage mechanism for time series data *(i.e.,* a "historian" function) which allows short-/mid-term archiving of high resolution time-stamped data. With high fidelity data, no events are lost. Efficient compression algorithms (e.g. a variation of swinging door) may be used to reduce storage and communication demands. The Intelligent PLC may also offer an intelligent on-device data generation method in some embodiments. Methods for data filtering may be applied directly where data is generated to ensure that additional data is only stored if it provides additional information content. These methods may also actively analyze incoming data and configure data acquisition according to the current needs, for example, by adjusting the sample rate or by storing data only if certain events have been detected. The Intelligent PLC may also enable rich and semantic contextualization, and perform control layer semantic analytics. Additionally, in some embodiments, the Intelligent PLC also provides distributed analytics across automation systems.

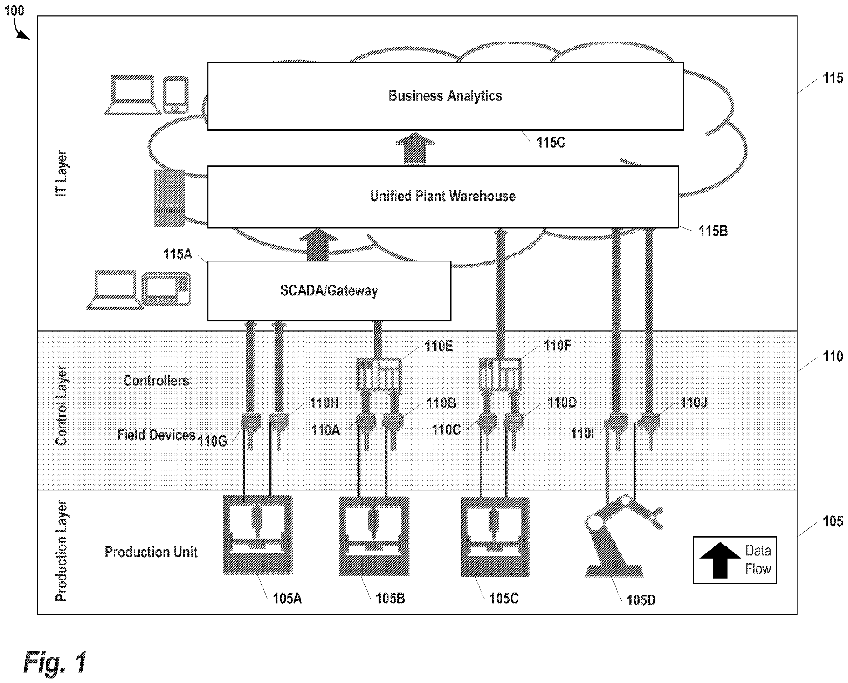

FIG. 1 provides a system view of an Intelligent PLCs integrated into an automation system 100, according to some embodiments of the present invention. This example conceptually partitions the industrial environment into a Production Layer 105, a Control Layer 110, and an IT Layer 115. In conventional systems, most data handling functions are performed at the IT Layer 115. Using the Intelligent PLCs 110E and 110F, the system 100 illustrated in FIG. 1 pushes many of these data handling functions down to the Control Layer 110. For example, in some embodiments, historian capabilities such as efficient data compression for time-series data and intelligent filtering of data may be implemented directly on the Intelligent PLCs 110E and 110F. This allows the Control Layer 115 to utilize high-fidelity data with less storage/communication effort such that few, if any, events go undetected. In some embodiments, the Intelligent PLCs 110E and 110F also provide rich contextualization functionality. By adding control level knowledge to data, it may not be necessary to re-discover knowledge on Business Analytics 115C at the IT Layer 115. Additionally, in some embodiments, the Intelligent PLCs 110E and 110F provide data analytics functionality directly on their respective device, thus increasing machine and process efficiency.

Continuing with reference to FIG. 1, at the Production Layer 105, one or more production units (e.g., Unit 105A) operate. Each production unit sends and receives data through one or more field devices (e.g., Field Device 110A) at the Control Layer 110. At the Control Layer 110, each field device may be connected to an Intelligent PLC (e.g., Intelligent PLC 110E). Data received from the production units is transferred (either directly by the field devices or via an Intelligent PLC) to the IT Layer 115. The IT Layer 115 includes systems which perform various post-processing and storage tasks. The example of FIG. 1 includes a Supervisory Control and Data Acquisition (SCADA) Server (or Gateway) Component 115A. This Component 115A allows an operator to remotely monitor and control the devices at the Control Layer 110 and Production Layer 105. Additionally, the SCADA Server Component 115A collects data from the lower layers 105, 110 and processes the information to make it available to the Unified Plant Knowledge Warehouse 115B. The Unified Plant Knowledge Warehouse 115B provides further processing and storage of the data received from the lower layers 105, 110. Various functionality may be provided by the Unified Plant Knowledge Warehouse 115B. For example, in some embodiments, the Unified Plant Knowledge Warehouse 115B includes functionality for generating analytics based on the data generated by the lower layers 105, 110.

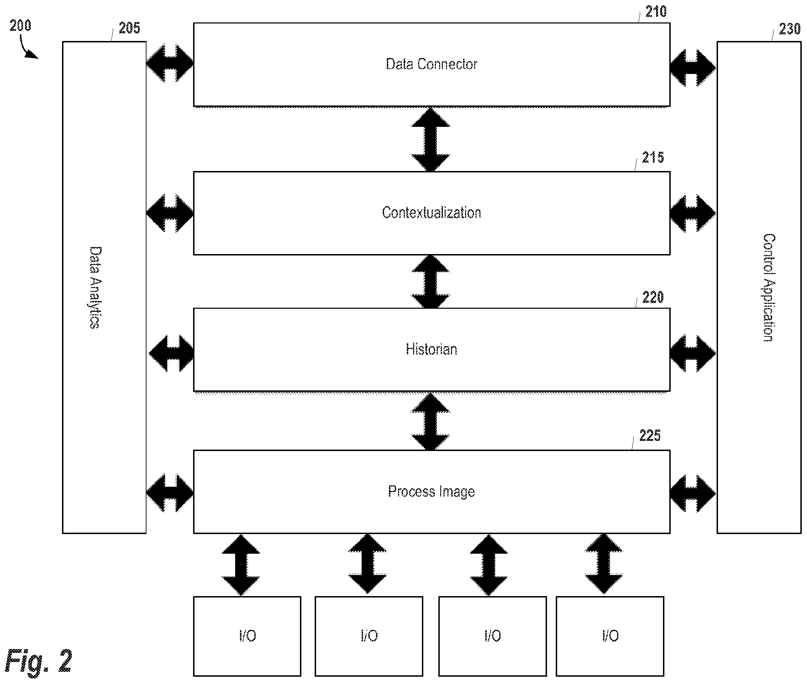

Each Intelligent PLC 110E and 110F includes three basic portions: one or more processors, a non-transitory, non-volatile memory system, and a data connector providing input/output functionality. The non-volatile memory system may take many forms including, for example, a removable memory card or flash drive. The non-volatile memory system, along with any volatile memory available on the PLC is used to make data accessible to the processor(s) as applications are executed. This data may include, for example, time-series data (i.e., history data), event data, and context model data. Applications that may execute within the Intelligent PLCs 110E and 110F are described in greater detail below with reference to FIG. 2.

The data connector of Intelligent PLC 110E is connected (wired or wirelessly) to Field Devices 110A and 110B. Similarly, the data connector of Intelligent PLC 110F is connected to Field Devices 110C and 110D. Any field devices known in the art may be used with the Intelligent PLC described herein. Example field devices that may be used with the Intelligent PLC include, without limitation, pressure switches, sensors, push buttons, flow switches, and level switches. Note that the Intelligent PLCs 110E and 110F may be integrated into the production environment piecemeal. For example, in FIG. 1, Production Units 105B and 105C are connected through their respective field devices to Intelligent PLCs 110E and 110F, while Production Units 105A and 105D communicate directly through their respective Field Devices 110G, 110H, 110I, 110J to the Unified Plant Knowledge Warehouse 115B.

In some embodiments, the Intelligent PLC 110E and 110F may gather, store, and process contextual knowledge associated with the automation data being generated by the system 100. As described in greater detail below with respect to FIG. 2, this context knowledge may include, for example, control knowledge, environmental conditions, and service incidences. Context information can be assigned statically as well as dynamically to data (e.g., contextualization via events detected in an incoming data stream or situations observed in the system environment). In some embodiments, this context information is specified using semantic models expressed in standardized, formal, domain-independent languages. For example, in one embodiment, knowledge representation Semantic Web standards are used. These standards provide a formal language to introduce classes and relations whose semantics are defined using logical axioms. One example of such a knowledge representation formalism is an "ontology" formalized with OWL or RDF(S). In contrast to traditional database systems, the Semantic Web technologies require no static schema. Therefore, models can be dynamically changed and data from different sources (e.g., automation devices) can be easily combined and semantically integrated. Interfaces for accessing and manipulating contextualized data within each respective Intelligent PLC may be defined based on well-established standards (e.g., W3C consortium, IEEE). Because contextualization is done where data is generated, insights can be made from data analytics with higher confidence and quality. For example, in some embodiments, the system 100 may provide model-based semantic analytics of automation data at the Control Layer 110 which incorporate contextual knowledge of the system 100.

FIG. 2 provides an illustration of the system components 200 included in an Intelligent PLC, according to some embodiments of the present invention. Process Image Component 225 is a memory area in a controller's CPU volatile system memory which is updated in each processing/scan cycle based on data associated with the production devices (e.g., the inputs and outputs of connected I/Os). The Process Image Component 225 may include various information related to the system. For example, the various sensors and actuators provide time series data such as measurements from physical processes. The Process Image Component 225 may include "soft sensors" data, which are calculated time series from other underlying virtual or physical sensors, control program variables, or auxiliary variables to describe the state of the control program. Soft-sensor data is described in greater detail in PCT Application No. PCT/US14/63105 entitled "Using Soft-Sensors in a Programmable Logic Controller". Multiple Processors may be used to gather data from I/O interfaces (and potentially also from external servers), execute the control and, additionally, execute data and knowledge processing and reasoning. As described in greater detail below, the processors connect the context models with the data received via I/O interfaces.

Continuing with reference to FIG. 2, in each processing step, the Control Application 230 reads the Process Image Component 225, executes deployed application logic, and writes results back into the Process Image Component 225. The process image of each cycle is read and permanently stored on a non-volatile physical storage medium by the Historian Component 220. In some embodiments, this Historian Component 220 is configured to deploy data compression algorithms to reduce data volume. It thereby can provide applications with access to past process images. Data may be stored either for a fixed time window or online algorithms are used to realize dynamic caching heuristics. As part of the Historian Component 220, intelligent data generation algorithms may continuously analyze the process image and context to adjust data generation parameters (e.g., sampling rate) of connected I/Os. For example, for fast changing sensor signals, a high sampling rate may be selected while for slowly changing sensor signals a lower sampling rate is sufficient.

The Data Analytics Component 205 comprises a set of data analysis algorithms that process the current or past process images (queried from the historian). Various data analysis algorithms may be included in the Data Analytics Component 205. For example, in some embodiments, these algorithms include one or more of clustering, classification, logic-based reasoning, and statistical analysis algorithms. Moreover, algorithms may be specified via a model which can be deployed during runtime on the device. The Data Analytics Component 205 may also include various analytical models and dedicated algorithms to interpret these models. The results generated by the Data Analytics Component 205 may be stored in the Historian Component 220, written back to the Process Image Component 225 and/or provided to external components via the Data Connector Component 210. Thus, the Intelligent PLC may be viewed as a device for providing distributed analytics to the other devices in the automation system.

A Contextualization Component 215 annotates incoming data with context information to facilitate its later interpretation. Context information, as used herein, may include any information that describes the meaning of data. For example, context of data in automation systems may include information about the device that generated the data (e.g., a sensor), about the structure of the automation system (e.g., topology of a plant), about the working mode of the system (e.g., downtime event), about the automation software and its status while the data was generated, and/or about the product/batch that was produced while the data was generated. The Contextualization Component is configured to provide data to any of the other components for more specific processing needs. The context information generated by the Contextualization Component 215 may not be restricted to the asset structure but may also include control knowledge, product-specific information, process information, event information, and potentially other aspects such as external events like weather information. Some context information may be imported from engineering tools and/or other external resources (e.g. Siemens Totally Integrated Automation tools, service reports, etc.). Additionally, in some embodiments, the Contextualization Component 215 provides semantic contextualization. The context may be represented by a standard modeling language (e.g. Web Ontology Language, Resource Description Framework) where the meaning of the language constructs is formally defined. Contextualization of data with these semantic modeling standards enables business analytics applications to automatically understand and interpret the data provided from the automation system without manual configuration effort.

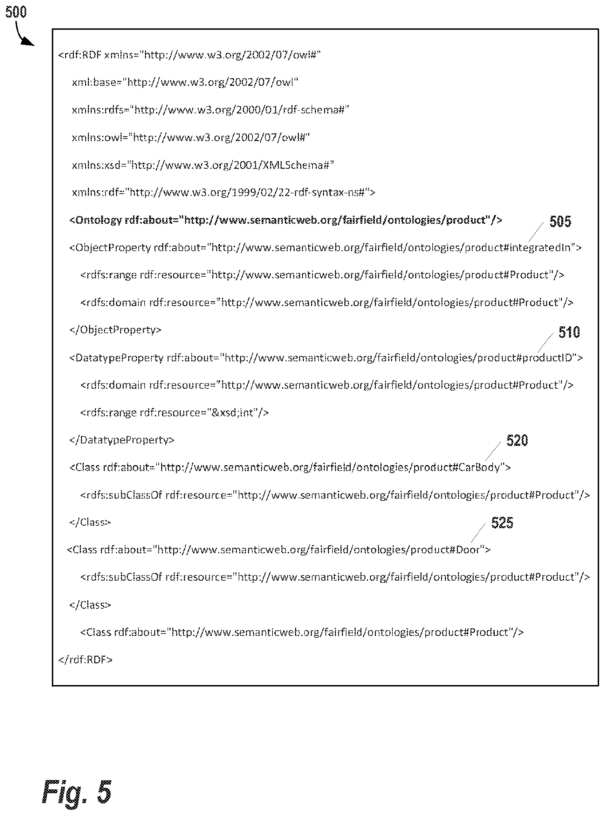

In some embodiments, the Contextualization Component 215 includes one or more context models defining an ontology for storing context knowledge. Each context model may include, for example, information about controlled processes, control procedures, connected devices (sensors/actuators), etc. Different context models (i.e., ontologies) from different domains or covering different aspects (e.g. product, asset, process, and sensor) may be combined and linked to each other to define the overall automation system context. The modular structure of ontology languages enables to dynamically add/remove context dimensions to automation system data, for example, depending on the application or recipient of data more or less context information can be added to the raw data by the automation devices. Context models are not restricted to hierarchically organized models and may consist of a network (i.e. not only trees), which subsumes various types of relations. In some embodiments, the Contextualization Component 215 specifies each context model declaratively in syntax file which allows model changes during runtime without compilation or stopping the automation device. One example of an ontological data file for specifying context models is shown below with respect to FIG. 5.

Any data captured or generated by the components of system 200 may be provided to external components via a Data Connector Component 210. In some embodiments, the Data Connector Component 210 delivers data via a push methodology (i.e., actively sending to external component). In other embodiments, a pull methodology may be used where data is queried by external component. Additionally, push and pull methodologies may be combined in some embodiments such that the Intelligent PLC is configured to handle both forms of data transfer.

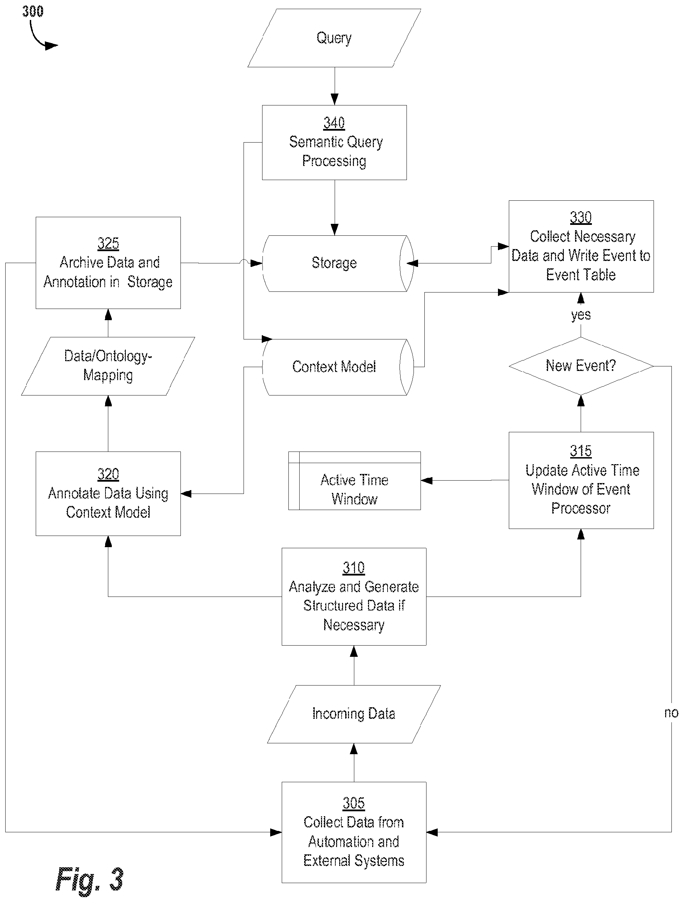

FIG. 3 provides a process 300 in which contextualized data is generated, stored, and utilized by an Intelligent PLC, according to some embodiments of the present invention. At, 305 incoming data is collected from automation devices (e.g., sensors) and other external systems. This data may include, for example, time series data, control events, alarms and other structured (e.g., relational data) and unstructured data (e.g., messages, texts). At 310, the data is analyzed to be determined whether it is automatically processable (e.g., it is structured or semi-structured. If it can be automatically processed, the process continues at steps 315 and 320 (described below). However, in case the data is not automatically processable (e.g., not structured or semi-structured) it is analyzed at 310 and transformed to structured data. For example, a controller alarm message containing a natural language text containing information on error type and parameters may be transformed to a structured representation.

Continuing with reference to FIG. 3, at 320, the data is annotated with and processed according to relevant context models available as ontologies in a standard ontology language (e.g., RDF, OWL as standardized by W3C). In some embodiments, the processing performed at 320 is done by explicitly generating semantic data as instances of the ontology. In some embodiments, this is done by using RDF triples. As is well understood in the art, the underlying structure of an expression in RDF is a collection of triples comprising a subject, a predicate and an object. Each predicate represents a statement of a relationship between the things denoted by the subjects and objects that it links. Each portion of a triple has a universal resource indicator (URI) associated with it. Thus, a URI may be generated at 320 based on the context model. One or more triples may then be created which encode the relationship between this data item and other data in the automation system environment. Alternatively, in other embodiments, the processing at 320 is performed by linking an identifier of the sensor generating the incoming data to the corresponding concept (e.g., class) in the ontology which is then resolved by the query processor (see step 340 below). At 325, the semantically contextualized data is stored. In some embodiments, this storage is performed in a historian (e.g., with annotation via mapping of IDs), while, in other embodiments, data may be stored in a database constructed specially for the storage and retrieval of triples (i.e., a triplestore) with direct annotation of data.

At 315, incoming data is used to update the active window of in event engine which continuously analyzes the data in its active window in order to generate new events. Generation of events may be done by specification, for example, using defined rules or patterns. Once a new event is detected, at 330 context information required for the event (as defined in the context model) is collected from the (non-volatile or volatile) storage. New events may also be stored in the storage during step 330.

At 340, data in the storage is made available via a semantic query processor. This processor may execute a query formulated against the semantic context model (e.g. SPARQL query) and retrieve the relevant data. In some embodiments, data is directly stored as semantic data (e.g. as RDF in a triplestore) and the query may be natively executed. In other embodiments, the data is stored in a plain historian and the query is translated (SPARQL -> Historian queries) based on the context models.

Note that FIG. 3 illustrates two distinct processing paths: contextualization of data occurs at steps 320 and 325, while event processing is performed at steps 315 and 330. These two processing paths may be executed in parallel or sequentially. In some embodiments, the Intelligent PLC is configured to allow processing based on the available resources on the Intelligent PLC. For example, for a multi-processor controller, one processor may be dedicated to contextualization, while another processor handles event processing. Conversely, for a single-processor environment, the two processing paths may be executed sequentially.

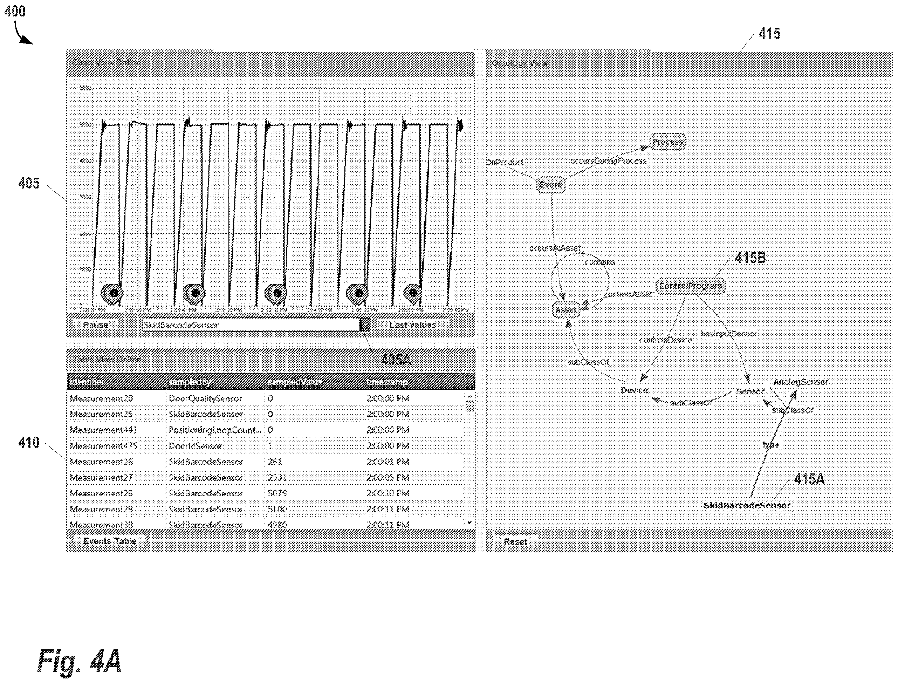

FIG. 4A provides a view 400 of a graphical user interface (GUI) referred to herein as a "Smart Data Browser" which provides ontological information used in the contextualization of automation data, according to some embodiments of the present invention. This tool enables a user to connect to an Intelligent PLC via a graphical interface (e.g., web browser) to retrieve and display live data being gathered by the PLC. In the Smart Data Browser, data is displayed along with context information, allowing a user to quickly understand and diagnosis issues associated with the automation system. The Smart Data Brower includes a Chart View Section 405 which provides charts related to live sensor and event data. In the example of FIG. 4A, data associated with a skid barcode sensor is shown. A dropdown selector 405A allows a user to select other available sensor data for display. A Table View Section 410 includes measurement values for various sensors in tabular form. In FIG. 4A, data is organized displayed with four fields: a unique identifier, an indication of the sensor providing the sample, the sampled value, and a timestamp when the sample was acquired. In other embodiments, additional fields may be displayed in the Table View Section 410.

Continuing with reference to FIG. 4A, the Smart Data Browser includes an Ontology View Section 415 which allows the user to browse and navigate the ontological models associated with the sensor and event data. Thus, for example, the Ontology View Section 415 may include various control models, event models, asset models, process models, and product/material models associated with the data displayed in the Chart View Section 405. In the example of FIG. 4A, graphical indicator 415A corresponds to the skid barcode sensor providing the data displayed in the Chart View Section 405. The relationships between skid barcode sensor and various ontological models ("Sensor", "ControlProgram," "Device," "Asset," "Event," and "Process") is illustrated by additional graphical indicators connected by arrows with the skid barcode sensor's graphical indicator 415A. A user can browse through the various models through interaction with the various graphical indictors. For example, in some embodiments, double-clicking on the control program graphical indicator 415B causes the Ontology View Section 415 to be adjusted to focus on the relations associated with the control program.

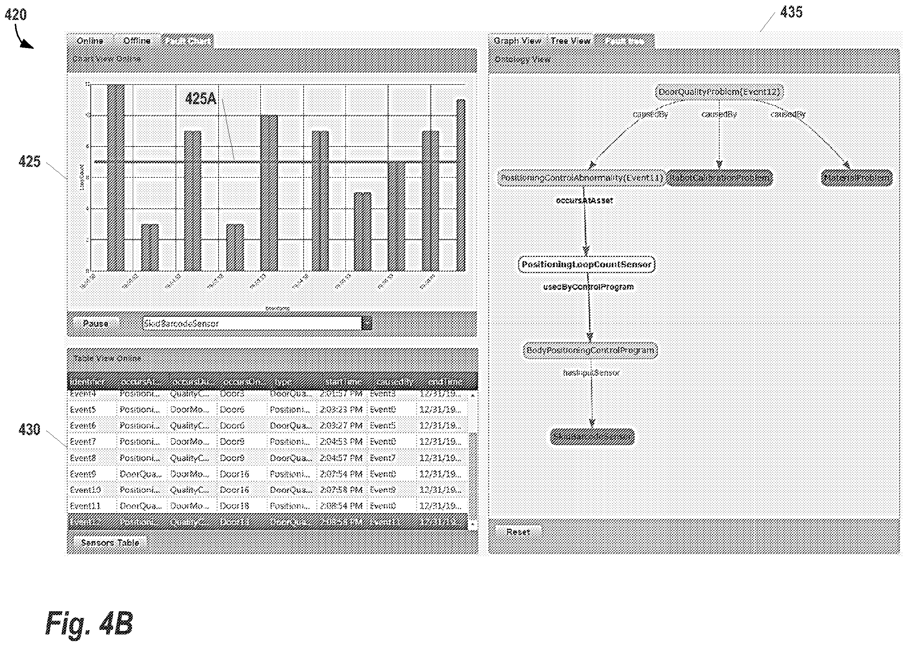

FIG. 4B provides an alternate view 420 of the Smart Data Browser where fault data is presented, according to some embodiments of the present invention. In this view, the Smart Data Browser uses control knowledge to provide complete fault tree explaining quality problems. Similar to FIG. 4A, the example of FIG. 4B includes a Chart View Section 425 and a Table View Section 430 where data associated with quality problems is illustrated. The Chart View Section 425 provides a chart of particular variables (loop count) according to time, along with an indication of an expected threshold. In the example of FIG. 4B, a line 425A is used to indicate the threshold. In other embodiments, depending on the representation of the data in the Chart View Section 425, other indications of the threshold may be utilized. The Table View Section 430 includes a table with event information. Contextual information is provided with each event such as, for example, when the event occurs at (e.g., position in the system), when the event occurs (e.g., during which process), what physical items cause the quality error (e.g., a particular car door being processed), the type of event (e.g., a position fault), time information, and one or more causal events (i.e., events linked to the fault). An Ontology View Section 435 provides a graphical view of the fault event, with contextual information indicating causal links between various portions of the ontology.

FIG. 5 provides an example of a product ontology file 500 in RDF/XML syntax, as may be utilized according to some embodiments of the present invention. In short, as is understood in the art, RDF/XML is a language for expressing ontologies in human and machine readable form. Resource Description Framework (RDF) is a family of World Wide Web Consortium (W3C) specifications which were originally designed as a metadata data model. RDF/XML is a syntax defined by the WW3C, to express RDF model data as an Extensible Markup Language (XML) document. In the example of FIG. 5, a product data model is shown providing a list of properties associated with a particular product. These properties include an object property 505 specifying how the product integrates with other products and a data type property 510 specifying a product ID. Additionally, the product ontology file 500 includes a pair of attributes 520 and 525 which indicate this ontology corresponds to a car body product, specifically a car door. One of the benefits of using a RDF/XML syntax as shown in FIG 5 is that semantic models may be modularized with particular uniform resource identifiers (URIs) and namespaces. Thus, context models can be customized based on particular automation applications. It should also be noted that the use of RDF/XML is only one example of how the product ontology can be represented and stored. It other embodiments different syntaxes and/or file formats may be utilized

The contextualization methods, systems, and apparatuses, described herein offer many advantages over contextual automation systems. For example, as contextualization is done by the automation device/controller itself, the device (or its owner) can decide which context information should be provided to a certain external system and which context information should not (and may be kept internally available only for its own data analysis functions). Adding explicit formal semantics to data using standard languages enables third party systems to understand and interpret the data without dedicated manual configuration (i.e., enabling sophisticated automated configuration of MES, SCADA systems and reducing system management efforts). Explicit formal semantics enables reuse of commodity analytics libraries for data interpretation (e.g., detect complex event frames) and model management. Explicit formal semantics allows to dynamically integrate data from different sources (e.g., automation devices) enabling plug-n-play concepts and reducing configuration effort. Moreover, the use of standardized context languages and interfaces enables interoperability and "open" application/model ecosystem with external partners. For example, third party control/analytics/historian applications or third party hardware modules running control/analytics/historian functions can be connected.

In some embodiments, the Intelligent PLC provides an ecosystem on top of which applications may be constructed which utilize context data. For example, in one embodiment, the software of the Intelligent PLC includes an application programming interface (API) specifying how external software components can interact with the software operating on the Intelligent PLC. This API may include functions such as contextualizing new data or querying existing contextualized data. The API may also be used to network individual Intelligent PLCs together, thereby creating a network of controllers which can enhance their processing of data by sharing context data associated with their respective control programs.

The processors described herein as used by control layer devices may include one or more central processing units (CPUs), graphical processing units (GPUs), or any other processor known in the art. More generally, a processor as used herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

Various devices described herein including, without limitation, the control layer devices and related computing infrastructure, may include at least one computer readable medium or memory for holding instructions programmed according to embodiments of the invention and for containing data structures, tables, records, or other data described herein. The term "computer readable medium" as used herein refers to any medium that participates in providing instructions to one or more processors for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks. Non-limiting examples of volatile media include dynamic memory. Non-limiting examples of transmission media include coaxial cables, copper wire, and fiber optics, including the wires that make up a system bus. Transmission media may also take the form of acoustic or light waves, such as those generated during radio wave and infrared data communications.

An executable application, as used herein, comprises code or machine readable instructions for conditioning the processor to implement predetermined functions, such as those of an operating system, a context data acquisition system or other information processing system, for example, in response to user command or input. An executable procedure is a segment of code or machine readable instruction, sub-routine, or other distinct section of code or portion of an executable application for performing one or more particular processes. These processes may include receiving input data and/or parameters, performing operations on received input data and/or performing functions in response to received input parameters, and providing resulting output data and/or parameters.

A graphical user interface (GUI), as used herein, comprises one or more display images, generated by a display processor and enabling user interaction with a processor or other device and associated data acquisition and processing functions. The GUI also includes an executable procedure or executable application. The executable procedure or executable application conditions the display processor to generate signals representing the GUI display images. These signals are supplied to a display device which displays the image for viewing by the user. The processor, under control of an executable procedure or executable application, manipulates the GUI display images in response to signals received from the input devices. In this way, the user may interact with the display image using the input devices, enabling user interaction with the processor or other device.

The functions and process steps herein may be performed automatically, wholly or partially in response to user command. An activity (including a step) performed automatically is performed in response to one or more executable instructions or device operation without user direct initiation of the activity.

The system and processes of the figures are not exclusive. Other systems, processes and menus may be derived in accordance with the principles of the invention to accomplish the same objectives. Although this invention has been described with reference to particular embodiments, it is to be understood that the embodiments and variations shown and described herein are for illustration purposes only. Modifications to the current design may be implemented by those skilled in the art, without departing from the scope of the invention. As described herein, the various systems, subsystems, agents, managers and processes can be implemented using hardware components, software components, and/or combinations thereof. No claim element herein is to be construed under the provisions of 35 U.S.C. 112, sixth paragraph, unless the element is expressly recited using the phrase "means for."

## Claims

1. A method of contextualizing automation system data in an intelligent programmable logic controller (110E, 110F), the method comprising:
1.1 collecting (305), by the intelligent programmable logic controller (110E, 110F), automation system data;
1.2 creating (310), by the intelligent programmable logic controller (110E, 110F), a structured representation of the automation system data;
1.3 selecting (320), by the intelligent programmable logic controller (110E, 110F), a semantic context model from a plurality of available semantic context models based on relevance to the structured representation of the automation system data;
1.4 creating (320), by the intelligent programmable logic controller (110E, 110F), semantically contextualized data using the semantic context model and the structured representation of the automation system data; and
1.5 storing (325), by the intelligent programmable logic controller (110E, 110F), the semantically contextualized data on a non-volatile computer-readable storage medium operably coupled to the intelligent programmable logic controller (110E, 110F); and
1.6 wherein the semantically contextualized data is created using the semantic context model and the structured representation of the automation system data by generating the semantically contextualized data as instances of an ontology associated by the semantic context model;
1.7.1 continuously analyzing (315) the automation system data, by the intelligent programmable logic controller (110E, 110F), to generate new events using defined rules or patterns to produce event data, and responsive to a new event, collecting (330), from the storage medium, the semantically contextualized data associated with the event data,
1.7.2 storing the event data accessible to queries, and
1.7.3 providing query responses to a graphical user interface (400, 420, 435) for presenting live automation data and event data as stored by the intelligent programmable logic controller (110E, 110F) including contextual information indicating causal links between portions of the ontological model.

2. The method of claim 1, wherein the semantically contextualized data is expressed using Resource Description Framework or Web Ontology Language.

3. The method of claim 1 or 2, wherein the semantically contextualized data is stored in a triplestore located on the non-volatile computer-readable storage medium operably coupled to the intelligent programmable logic controller.

4. The method of claim 1, further comprising:
identifying a sensor associated with generating the automation system data;
identifying an ontological entity in the semantic context model related to the sensor,
wherein the semantically contextualized data comprises an indication of a mapping between the sensor and the ontological entity.

5. The method of claim 1, further comprising:
updating, by the intelligent programmable logic controller, an active window of an event engine based on the automation system data.

6. The method of claim 5, further comprising:
generating, by the event engine, one or more new events based on data in the active window;
detecting, by the intelligent programmable logic controller, a new event;
automatically retrieving, by the intelligent programmable logic controller, stored contextualized data associated with the new event from the non-volatile computer-readable storage medium operably coupled to the intelligent programmable logic controller; and
writing, by the intelligent programmable logic controller, the new event and the stored contextualized data to an event table.

7. The method of claim 1, further comprising:
receiving, by the intelligent programmable logic controller, a request for contextualized data stored in the non-volatile computer-readable storage medium;
formulating, by the intelligent programmable logic controller, a query based on the request and the semantic context model;
retrieving, by the intelligent programmable logic controller, response data from the non-volatile computer-readable storage medium based on the query.

8. An intelligent programmable logic controller comprising:
i) a processor configured to execute according to a scan cycle;
ii) a volatile computer-readable storage medium comprising a process image area;
iii) a non-volatile computer-readable storage medium; and
iv) a plurality of controller components executed by the processor according to the scan cycle, the plurality of controller components comprising:
iv-1) a data transfer component (210) configured to update the process image area during each scan cycle with contents comprising automation system data;
iv-2) a contextualization component (215) configured to:
- create (310) a structured representation of the automation system data,
- select (320) a semantic context model from a plurality of available semantic context models based on relevance to the structured representation of the automation system data, and
- create (320) semantically contextualized data using the semantic context model and the structured representation of the automation system data; and
iv-3) a historian component (220) configured to store the semantically contextualized data on the non-volatile computer-readable storage medium; and
iv-4) wherein the semantically contextualized data is created using the semantic context model and the structured representation of the automation system data by generating the semantically contextualized data as instances of an ontology associated by the semantic context model;
iv-5) an event engine configured to continuously analyze (315) the automation system data to generate new events using defined rules or patterns to produce event data, and responsive to a new event, collect (330), from the storage medium, the semantically contextualized data associated with the event data; wherein
iv-6) the historian component (220) is configured to
- store the semantically contextualized data and the event data on the non-volatile computer-readable storage medium accessible to queries, and
- provide query responses to a graphical user interface (400, 420, 435) for presenting live automation data and event data as stored including contextual information indicating causal links between portions of the ontological model.

9. The controller of claim 8, wherein the historian component stores the semantically contextualized data in a triplestore located on the non-volatile computer-readable storage medium operably coupled to the intelligent programmable logic controller.

10. The controller of claim 8, wherein the contextualization component is further configured to:
identify a sensor associated with generating the automation system data;
identify an ontological entity in the semantic context model related to the sensor,
wherein the semantically contextualized data comprises an indication of a mapping between the sensor and the ontological entity.

11. The controller of claim 8, wherein the contextualization component (215) is further configured to:
update (315) an active window of an event engine based on the automation system data.

12. The controller of claim 11, wherein the contextualization component (215) is further configured to:
generate, using the event engine, one or more new events based on data in the active window;
detect a new event;
automatically retrieve stored contextualized data associated with the new event from the non-volatile computer-readable storage medium operably coupled to the intelligent programmable logic controller; and
write the new event and the stored contextualized data to an event table.

13. The controller of claim 11, wherein the contextualization component (215) is further configured to:
receive a request for contextualized data stored in the non-volatile computer-readable storage medium;
formulate a query based on the request and the semantic context model;
retrieve response data from the non-volatile computer-readable storage medium based on the query.

## Patentansprüche

1. Verfahren zum Kontextualisieren von Automatisierungssystemdaten in einer intelligenten programmierbaren Logiksteuereinheit (110E, 110F), wobei das Verfahren Folgendes umfasst:
1.1 Sammeln (305) durch die intelligente programmierbare Logiksteuereinheit (110E, 110F) von Automatisierungssystemdaten;
1.2 Erzeugen (310) durch die intelligente programmierbare Logiksteuereinheit (110E, 110F) einer strukturierten Repräsentation der Automatisierungssystemdaten;
1.3 Auswählen (320) durch die intelligente programmierbare Logiksteuereinheit (110E, 110F) eines semantischen Kontextmodells aus mehreren verfügbaren semantischen Kontextmodellen anhand der Relevanz für die strukturierte Repräsentation der Automatisierungssystemdaten;
1.4 Erzeugen (320) durch die intelligente programmierbare Logiksteuereinheit (110E, 110F) semantisch kontextualisierter Daten unter Verwendung des semantischen Kontextmodells und der strukturierten Repräsentation der Automatisierungssystemdaten; und
1.5 Speichern (325) durch die intelligente programmierbare Logiksteuereinheit (110E, 110F) der semantisch kontextualisierten Daten auf einem nichtflüchtigen computerlesbaren Speichermedium, das an die intelligente programmierbare Logiksteuereinheit (110E, 110F) betriebstechnisch gekoppelt ist;
1.6 wobei die semantisch kontextualisierten Daten unter Verwendung des semantischen Kontextmodells und der strukturierten Repräsentation der Automatisierungssystemdaten durch Erzeugen der semantisch kontextualisierten Daten als Instanzen einer Ontologie, die durch das semantische Kontextmodell zugeordnet ist, erzeugt werden;
1.7.1 kontinuierlich Analysieren (315) der Automatisierungssystemdaten durch die intelligente programmierbare Logiksteuereinheit (110E, 110F), um neue Ereignisse unter Verwendung definierter Regeln oder Muster, um Ereignisdaten zu erzeugen, zu erzeugen, und als Reaktion auf ein neues Ereignis Sammeln (330) von dem Speichermedium der semantisch kontextualisierten Daten, die den Ereignisdaten zugeordnet sind,
1.7.2 Speichern der Ereignisdaten zugänglich für Abfragen und
1.7.3 Liefern von Abfrageantworten an eine grafische Anwenderschnittstelle (400, 420, 435) zum Darstellen von Live-Automatisierungsdaten und wie durch die intelligente programmierbare Logiksteuereinheit (110E, 110F) gespeicherten Ereignisdaten, die kontextuelle Informationen enthalten, die kausale Verbindungen zwischen Teilen des ontologischen Modells angeben.

2. Verfahren nach Anspruch 1, wobei die semantisch kontextualisierten Daten unter Verwendung eines Betriebsmittelbeschreibungsrahmenwerks oder einer Web-Ontologiesprache ausgedrückt werden.

3. Verfahren nach Anspruch 1 oder 2, wobei die semantisch kontextualisierten Daten in einem Dreifachspeicher gespeichert werden, der sich auf dem nichtflüchtigen computerlesbaren Speichermedium befindet, das an die intelligente programmierbare Logiksteuereinheit betriebstechnisch gekoppelt ist.

4. Verfahren nach Anspruch 1, das ferner Folgendes umfasst:
Identifizieren eines Sensors, der dem Erzeugen der Automatisierungssystemdaten zugeordnet ist;
Identifizieren einer Ontologieentität in dem semantischen Kontextmodell bezüglich des Sensors,
wobei die semantisch kontextualisierten Daten eine Angabe einer Abbildung zwischen dem Sensor und der Ontologieentität umfassen.

5. Verfahren nach Anspruch 1, das ferner Folgendes umfasst:
Aktualisieren durch die intelligente programmierbare Logiksteuereinheit eines aktiven Fensters einer Ereignismaschine anhand der Automatisierungssystemdaten.

6. Verfahren nach Anspruch 5, das ferner umfasst:
Erzeugen durch die Ereignismaschine eines oder mehrerer neuer Ereignisse anhand von Daten in dem aktiven Fenster;
Detektieren durch die intelligente programmierbare Logiksteuereinheit eines neuen Ereignisses;
automatisch Erfassen durch die intelligente programmierbare Logiksteuereinheit gespeicherter kontextualisierter Daten, die dem neuen Ereignis zugeordnet sind, von dem nichtflüchtigen computerlesbaren Speichermedium, das an die intelligente programmierbare Logiksteuereinheit betriebstechnisch gekoppelt ist; und
Schreiben durch die intelligente programmierbare Logiksteuereinheit des neuen Ereignisses und der gespeicherten kontextualisierten Daten in eine Ereignistabelle.

7. Verfahren nach Anspruch 1, das ferner Folgendes umfasst:
Empfangen durch die intelligente programmierbare Logiksteuereinheit einer Anforderung für kontextualisierte Daten, die in dem nichtflüchtigen computerlesbaren Speichermedium gespeichert sind;
Formulieren durch die intelligente programmierbare Logiksteuereinheit einer Abfrage anhand der Anforderung und des semantischen Kontextmodells;
Erfassen durch die intelligente programmierbare Logiksteuereinheit von Antwortdaten von dem nichtflüchtigen computerlesbaren Speichermedium anhand der Abfrage.

8. Intelligente programmierbare Logiksteuereinheit, die Folgendes umfasst:
i) einen Prozessor, der konfiguriert ist, gemäß einem Abtastzyklus auszuführen;
ii) ein flüchtiges computerlesbares Speichermedium, das einen Prozessbildbereich umfasst;
iii) ein nichtflüchtiges computerlesbares Speichermedium; und
iv) mehrere Steuereinheitenkomponenten, die durch den Prozessor gemäß dem Abtastzyklus ausgeführt werden, wobei die mehreren Steuereinheitenkomponenten Folgendes umfassen:
iv-1) eine Datenübertragungskomponente (210), die konfiguriert ist, den Prozessbildbereich während jedes Abtastzyklus mit Inhalten, die Automatisierungssystemdaten umfassen, zu aktualisieren;
iv-2) eine Kontextualisierungskomponente (215), die konfiguriert ist zum:
- Erzeugen (310) einer strukturierten Repräsentation der Automatisierungssystemdaten,
- Auswählen (320) eines semantischen Kontextmodells aus mehreren verfügbaren semantischen Kontextmodellen anhand einer Relevanz zu der strukturierten Repräsentation der Automatisierungssystemdaten und
- Erzeugen (320) semantisch kontextualisierter Daten unter Verwendung des semantischen Kontextmodells und der strukturierten Repräsentation der Automatisierungssystemdaten; und
iv-3) eine Historikerkomponente (220), die konfiguriert ist, die semantisch kontextualisierten Daten auf dem nichtflüchtigen computerlesbaren Speichermedium zu speichern; und
iv-4) wobei die semantisch kontextualisierten Daten unter Verwendung des semantischen Kontextmodells und der strukturierten Repräsentation der Automatisierungssystemdaten durch Erzeugen der semantisch kontextualisierten Daten als Instanzen einer Ontologie, die durch das semantische Kontextmodell zugeordnet ist, erzeugt werden;
iv-5) eine Ereignismaschine, die konfiguriert ist, die Automatisierungssystemdaten kontinuierlich zu analysieren (315), um neue Ereignisse unter Verwendung definierter Regeln oder Muster, um Ereignisdaten zu erzeugen, zu erzeugen und als Reaktion auf ein neues Ereignis von dem Speichermedium die semantisch kontextualisierten Daten, die den Ereignisdaten zugeordnet sind, zu sammeln (330); wobei
iv-6) die Historikerkomponente (220) konfiguriert ist zum:
- Speichern der semantisch kontextualisierten Daten und der Ereignisdaten auf dem nichtflüchtigen computerlesbaren Speichermedium, das für Abfragen zugänglich ist, und
- Liefern von Abfrageantworten an eine grafische Anwenderschnittstelle (400, 420, 435) zum Darstellen von Live-Automatisierungsdaten und wie gespeicherten Ereignisdaten, die kontextuelle Informationen enthalten, die kausale Verbindungen zwischen Teilen des ontologischen Modells angeben.

9. Steuereinheit nach Anspruch 8, wobei die Historikerkomponente die semantisch kontextualisierten Daten in einem Dreifachspeicher, der sich auf dem nichtflüchtigen computerlesbaren Speichermedium befindet, das an die intelligente programmierbare Logiksteuereinheit betriebstechnisch gekoppelt ist, speichert.

10. Steuereinheit nach Anspruch 8, wobei die Kontextualisierungskomponente ferner konfiguriert ist zum:
Identifizieren eines Sensors, der dem Erzeugen der Automatisierungssystemdaten zugeordnet ist;
Identifizieren einer Ontologieentität in dem semantischen Kontextmodell bezüglich des Sensors,
wobei die semantisch kontextualisierten Daten eine Angabe einer Abbildung zwischen dem Sensor und der Ontologieentität umfassen.

11. Steuereinheit nach Anspruch 8, wobei die Kontextualisierungskomponente (215) ferner konfiguriert ist zum:
Aktualisieren (315) eines aktiven Fensters einer Ereignismaschine anhand der Automatisierungssystemdaten.

12. Steuereinheit nach Anspruch 11, wobei die Kontextualisierungskomponente (215) ferner konfiguriert ist zum:
Erzeugen unter Verwendung der Ereignismaschine eines oder mehrerer neuer Ereignisse anhand von Daten in dem aktiven Fenster;
Detektieren eines neuen Ereignisses;
automatisch Erfassen gespeicherter kontextualisierter Daten, die dem neuen Ereignis zugeordnet sind, von dem nichtflüchtigen computerlesbaren Speichermedium, das an die intelligente programmierbare Logiksteuereinheit betriebstechnisch gekoppelt ist; und
Schreiben des neuen Ereignisses und der gespeicherten kontextualisierten Daten in eine Ereignistabelle.

13. Steuereinheit nach Anspruch 11, wobei die Kontextualisierungskomponente (215) ferner konfiguriert ist zum:
Empfangen einer Anforderung für kontextualisierte Daten, die in dem nichtflüchtigen computerlesbaren Speichermedium gespeichert sind;
Formulieren einer Abfrage anhand der Anforderung und des semantischen Kontextmodells;
Erfassen von Antwortdaten von dem nichtflüchtigen computerlesbaren Speichermedium anhand der Abfrage.

## Revendications

1. Procédé de contextualisation de données de système d'automatisation dans un contrôleur logique programmable intelligent (110E, 110F), le procédé comprenant :
1.1 la collecte (305), par le contrôleur logique programmable intelligent (110E, 110F), de données de système d'automatisation ;
1.2 la création (310), par le contrôleur logique programmable intelligent (110E, 110F), d'une représentation structurée des données de système d'automatisation ;
1.3 la sélection (320), par le contrôleur logique programmable intelligent (110E, 110F), d'un modèle de contexte sémantique parmi une pluralité de modèles de contexte sémantique disponibles en fonction de sa pertinence pour la représentation structurée des données de système d'automatisation ;
1.4 la création (320), par le contrôleur logique programmable intelligent (110E, 110F), de données sémantiquement contextualisées à l'aide du modèle de contexte sémantique et de la représentation structurée des données de système d'automatisation ; et
1.5 la mémorisation (325), par le contrôleur logique programmable intelligent (110E, 110F), des données sémantiquement contextualisées sur un support de mémorisation non volatile lisible par ordinateur couplé fonctionnellement au contrôleur logique programmable intelligent (110E, 110F) ; et
1.6 dans lequel les données sémantiquement contextualisées sont créées à l'aide du modèle de contexte sémantique et de la représentation structurée des données de système d'automatisation en générant les données sémantiquement contextualisées en tant qu'instances d'une ontologie associée par le modèle de contexte sémantique ;
l.7.1 l'analyse continue (315) des données de système d'automatisation, par le contrôleur logique programmable intelligent (110E, 110F), pour générer de nouveaux événements en utilisant des règles ou modèles définis pour produire des données d'événements, et en réponse à un nouvel événement, la collecte (330), auprès du support de mémorisation, des données sémantiquement contextualisées associées aux données d'événements,
1.7.2 la mémorisation des données d'événement accessibles par des interrogations, et
1.7.3 la fourniture de réponses aux interrogations à une interface utilisateur graphique (400, 420, 435) afin de présenter des données d'automatisation en direct et des données d'événements mémorisées par le contrôleur logique programmable intelligent (110E, 110F) comportant des informations contextuelles indiquant des liens de causalité entre des parties du modèle ontologique.

2. Procédé selon la revendication 1, dans lequel les données sémantiquement contextualisées sont exprimées à l'aide d'un modèle Resource Description Framework ou d'un langage Web Ontology Language.

3. Procédé selon la revendication 1 ou 2, dans lequel les données sémantiquement contextualisées sont mémorisées dans une triple mémoire située sur le support de mémorisation non volatile lisible par ordinateur couplé fonctionnellement au contrôleur logique programmable intelligent.

4. Procédé selon la revendication 1, comprenant en outre :
l'identification d'un capteur associé à la génération des données de système d'automatisation;
l'identification d'une entité ontologique dans le modèle de contexte sémantique lié au capteur,
dans lequel les données sémantiquement contextualisées comprennent une indication d'une mise en correspondance entre le capteur et l'entité ontologique.

5. Procédé selon la revendication 1, comprenant en outre :
la mise à jour, par le contrôleur logique programmable intelligent, d'une fenêtre active d'un moteur d'événements basé en fonction des données de système d'automatisation.

6. Procédé selon la revendication 5, comprenant en outre :
la génération, par le moteur d'événements, d'un ou plusieurs nouveaux événements en fonction des données dans la fenêtre active;
la détection, par le contrôleur logique programmable intelligent, d'un nouvel événement;
la récupération automatique, par le contrôleur logique programmable intelligent, des données contextualisées mémorisées associées au nouvel événement à partir du support de mémorisation non volatile lisible par ordinateur couplé fonctionnellement au contrôleur logique programmable intelligent; et
l'écriture, par le contrôleur logique programmable intelligent, du nouvel événement et des données contextualisées mémorisées dans une table d'événements.

7. Procédé selon la revendication 1, comprenant en outre :
la réception par le contrôleur logique programmable intelligent, d'une demande de données contextualisées mémorisées dans le support de mémorisation non volatile lisible par ordinateur ;
la formulation, par le contrôleur logique programmable intelligent, d'une interrogation en fonction de la demande et du modèle de contexte sémantique ;
la récupération, par le contrôleur logique programmable intelligent, de données de réponse à partir du support de mémorisation non volatile lisible par ordinateur en fonction de l'interrogation.

8. Contrôleur logique programmable intelligent comprenant :
i) un processeur configuré pour fonctionner selon un cycle de balayage ;
ii) un support de mémorisation volatile lisible par ordinateur comprenant une zone d'image de processus ;
iii) un support de mémorisation non volatile lisible par ordinateur ; et
iv) une pluralité de composants de contrôleur exécutés par le processeur selon le cycle de balayage, la pluralité de composants de contrôleur comprenant :
iv-1) un composant de transfert de données (210) configuré pour mettre à jour la zone d'image de processus durant chaque cycle de balayage avec un contenu comprenant des données de système d'automatisation ;
iv-2) un composant de contextualisation (215) configuré pour :
- créer (310) une représentation structurée des données de système d'automatisation,
- sélectionner (320) un modèle de contexte sémantique parmi une pluralité de modèles de contexte sémantique disponibles en fonction de sa pertinence pour la représentation structurée des données de système d'automatisation, et
- créer (320) des données sémantiquement contextualisées à l'aide du modèle de contexte sémantique et de la représentation structurée des données de système d'automatisation ; et
iv-3) un composant historique (220) configuré pour mémoriser les données sémantiquement contextualisées sur le support de mémorisation non volatile lisible par ordinateur ; et
iv-4) dans lequel les données sémantiquement contextualisées sont créées à l'aide du modèle de contexte sémantique et de la représentation structurée des données de système d'automatisation en générant les données sémantiquement contextualisées en tant qu'instances d'une ontologie associée par le modèle de contexte sémantique;
iv-5) un moteur d'événements configuré pour analyser continuellement (315) les données de système d'automatisation afin de générer de nouveaux événements en utilisant des règles ou des modèles définis pour produire des données d'événements, et en réponse à un nouvel événement, collecter (330), à partir du support de mémorisation, les données sémantiquement contextualisées associées aux données d'événements ; dans lequel
iv-6) le composant historique (220) est configuré pour
- mémoriser les données sémantiquement contextualisées et les données d'événements sur le support de mémorisation non volatile lisible par ordinateur accessible par des interrogations, et
- fournir des réponses aux interrogations à une interface utilisateur graphique (400, 420, 435) pour présenter des données d'automatisation en direct et des données d'événements mémorisées comportant des informations contextuelles indiquant des liens de causalité entre des parties du modèle ontologique.

9. Contrôleur selon la revendication 8, dans lequel le composant historique mémorise les données sémantiquement contextualisées dans une triple mémoire située sur le support de mémorisation non volatile lisible par ordinateur couplé fonctionnellement au contrôleur logique programmable intelligent.

10. Contrôleur selon la revendication 8, dans lequel le composant de contextualisation est configuré en outre pour :
identifier un capteur associé à la génération des données de système d'automatisation ;
identifier une entité ontologique dans le modèle de contexte sémantique lié au capteur,
dans lequel les données sémantiquement contextualisées comprennent une indication d'une mise en correspondance entre le capteur et l'entité ontologique.

11. Contrôleur selon la revendication 8, dans lequel le composant de contextualisation (215) est configuré en outre pour:
mettre à jour (315) une fenêtre active d'un moteur d'événements en fonction des données de système d'automatisation.

12. Contrôleur selon la revendication 11, dans lequel le composant de contextualisation (215) est configuré en outre pour:
générer, à l'aide du moteur d'événements, un ou plusieurs nouveaux événements en fonction des données dans la fenêtre active ;
détecter un nouvel événement ;
récupérer automatiquement des données contextualisées mémorisées associées au nouvel événement à partir du support de mémorisation non volatile lisible par ordinateur couplé fonctionnellement au contrôleur logique programmable intelligent; et
écrire le nouvel événement et les données contextualisées mémorisées dans une table d'événements.

13. Contrôleur selon la revendication 11, dans lequel le composant de contextualisation (215) est configuré en outre pour:
recevoir une demande de données contextualisées mémorisée dans le support de mémorisation non volatile lisible par ordinateur ;
formuler une interrogation en fonction de la demande et du modèle de contexte sémantique ;
récupérer des données de réponse à partir du support de mémorisation non volatile lisible par ordinateur en fonction de l'interrogation.
